# FASCICULE DE BREVET EUROPEEN

(11) **EP 0 676 373 B1**
(45) Date de publication et mention de la délivrance du brevet: **16.09.1998**
(21) Numéro de dépôt: 95400751.4
(22) Date de dépôt: 04.04.1995
(51) Int. Cl.: C01B 31/18

(54) **Procédé et installation de production de monoxyde de carbone**
Verfahren und Anlage zur Herstellung von Kohlenmonoxyd
Process and installation for the production of carbon monoxide

(30) Priorité: 11.04.1994 FR 9404219
(43) Date de publication de la demande: 11.10.1995
(73) Titulaire: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: Billy, Jean, F-94420 Le Plessis Trevise (FR); Granier, François, F-94130 Nogent Sur Marne (FR)
(74) Mandataire: Mercey, Fiona Susan

(56) Documents cités:
- EP-A- 0 092 770
- EP-A- 0 130 284
- EP-A- 0 313 883

## Description

La présente invention est relative à un procédé de production de monoxyde de carbone (CO) à partir d'un mélange gazeux contenant essentiellement du monoxyde de carbone, de l'hydrogène et d'autres constituants dont l'azote et éventuellement l'argon.

Dans la technique classique, du monoxyde de carbone est obtenu lors du reformage à la vapeur ou de l'oxydation partielle d'hydrocarbures. Du monoxyde de carbone de haute pureté peut être produit sur de telles unités en employant des méthodes de purification classiques. Des procédés cryogéniques de purification sont connus comme la condensation partielle ou le lavage au méthane liquide; d'autres procédés employés pour la purification sont les procédés d'absorption, comme le procédé COSORB de TENNECO CHEMICALS, ou d'adsorption (Pressure Swing Adsorption ou PSA).

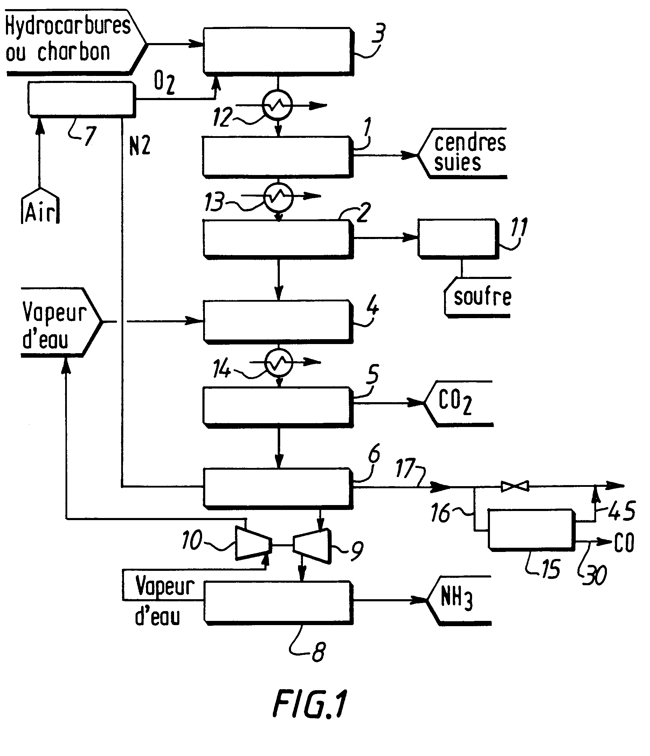

Du monoxyde de carbone est également produit lors de la préparation du mélange de synthèse utilisé pour la synthèse d'ammoniac, lorsque l'hydrogène est obtenu par oxydation partielle d'hydrocarbures ou de charbon. Un tel procédé de préparation du mélange de synthèse est illustré sur le diagramme de la Figure 1 et va être décrit sommairement ci-dessous.

Après l'élimination des suies, en 1, et celle du sulfure d'hydrogène, en 2, du mélange issu de l'étape d'oxydation partielle d'hydrocarbures ou de charbon, en 3, l'étape 4 de conversion du CO transforme la majeure partie du CO présent, sous l'action de vapeur d'eau, en dioxyde de carbone (CO₂) en produisant de l'hydrogène. Après l'élimination de CO₂ par absorption, en 5, le mélange gazeux est soumis à une étape 6 de lavage à l'azote qui fournit le mélange de synthèse (N₂+3H₂), ainsi qu'un gaz résiduaire contenant essentiellement CO, H₂, du méthane CH₄ et N₂.

On a également représenté à la Figure 1 les autres opérations de la synthèse d'ammoniac : distillation d'air, en 7, fournissant l'oxygène nécessaire à l'oxydation partielle 3 et l'azote nécessaire pour le lavage 6; synthèse de NH₃ proprement dite en 8, à partir du mélange issu de l'étape 6, comprimé en 9; détente de vapeur dans une turbine 10 pour entraîner le compresseur 9; traitement du sulfure d'hydrogène issu de l'étape 2, en 11, par un procédé Claus; et divers échangeurs de chaleur 12 à 14.

Dans la technique antérieure, ce gaz résiduaire de l'étape de lavage à l'azote était brûlé.

Un procédé de production de CO, qui permet, dans le cas particulier ci-dessus, de valoriser le gaz résiduaire riche en CO en tant que mélange d'alimentation d'un procédé de production de CO est connu de EP-A-0092770. Un des procédés décrit dans cette demande de brevet comporte une étape de lavage en méthane pour séparer l'hydrogène d'un mélange comprenant également le méthane, le monoxyde de carbone et l'azote. Le condensat ainsi produit est distillé dans une première colonne de distillation pour séparer le méthane du reste du mélange. Le gaz de tête de cette première colonne, contenant principalement le monoxyde de carbone, est distillé dans une deuxième colonne de distillation pour enlever l'azote et l'hydrogène restant, le monoxyde de carbone pur étant soutiré de la cuve de cette colonne.

Le monoxyde de carbone sert ensuite comme réfrigérant pour les condenseurs de tête de la première et de la deuxième colonne.

L'invention a pour but de fournir un procédé de production de monoxyde de carbone avec une consommation d'énergie et un coût d'investissement réduits.

A cet effet, l'invention a pour objet un procédé de production de monoxyde de carbone à partir d'un mélange gazeux contenant essentiellement du monoxyde de carbone, de l'hydrogène et d'autres constituants dont l'azote et le méthane dans lequel le monoxyde de carbone est séparé desdits autres constituants par distillation sous une moyenne pression, ladite distillation comprenant une première distillation dans une première colonne séparant le méthane dudit condensat et une seconde distillation dans une deuxième colonne séparant le monoxyde de carbone du mélange provenant de la première distillation caractérisé en ce que du liquide est utilisé sous une basse pression pour refroidir la tête d'une seule des deux colonnes de distillation et du liquide est soutiré en un emplacement intermédiaire de ladite colonne, dont la tête est refroidie, pour assurer le reflux de l'autre colonne de distillation.

Le procédé de production de CO suivant l'invention peut comporter une ou plusieurs des caractéristiques suivantes :
- du CO liquide est utilisé sous une basse pression pour refroidir la tête de la colonne de distillation;
- du CO de refoulement d'un compresseur de cycle est, éventuellement après détente à la moyenne pression, directement injecté en cuve de la seconde colonne de distillation, afin d'en assurer le rebouillage;
- le fluide basse pression du cycle frigorifique CO ouvert se compose d'un mélange d'une part de CO liquide moyenne pression séparé par distillation et détendu à la basse pression, et d'autre part de CO de refoulement d'un compresseur de cycle, liquéfié et détendu à la basse pression;
- l'hydrogène et les produits résiduaires de la distillation sont mélangés, réchauffés puis détendus dans une turbine pour contribuer à la production de froid nécessaire aux étapes de séparation;
- l'hydrogène et les produits résiduaires gazeux de la distillation sont mélangés, réchauffés puis détendus dans une turbine, et les produits résiduaires liquides de la distillation, et éventuellement une partie du condensat de l'étape de condensation partielle, sont mélangés, après détente, au gaz d'échappement de la turbine et le mélange est vaporisé au bout froid de l'échangeur pour contribuer à la production de froid nécessaire aux étapes de séparation;
- le procédé est intégré dans un procédé de synthèse d'ammoniac dans lequel la production du mélange de synthèse (N₂+3H₂) comprend une étape initiale d'oxydation partielle d'hydrocarbures ou de charbon et une étape finale de lavage à l'azote et le monoxyde de carbone est récupéré par voie cryogénique dans le gaz résiduaire de l'étape de lavage à l'azote.

L'invention a également pour objet une installation de production de monoxyde de carbone à partir d'un mélange gazeux contenant essentiellement du monoxyde de carbone, de l'hydrogène et d'autres constituants dont l'azote et de méthane, comprenant des moyens cryogéniques de séparation des constituants du mélange gazeux, dont un échangeur de chaleur, un pot séparateur, un appareil de distillation relié à la cuve du pot séparateur comprenant une première colonne de séparation méthane/azote-monoxyde de carbone, et une deuxième colonne de séparation azote/monoxyde de carbone caractérisée en ce qu'une conduite d'amenée de gaz relie la tête d'une des deux colonnes à un emplacement intermédiaire de l'autre des deux colonnes à la tête d'une des deux colonnes et un condenseur de tête d'une seule des colonnes est relié à une conduite de liquide à la basse pression.

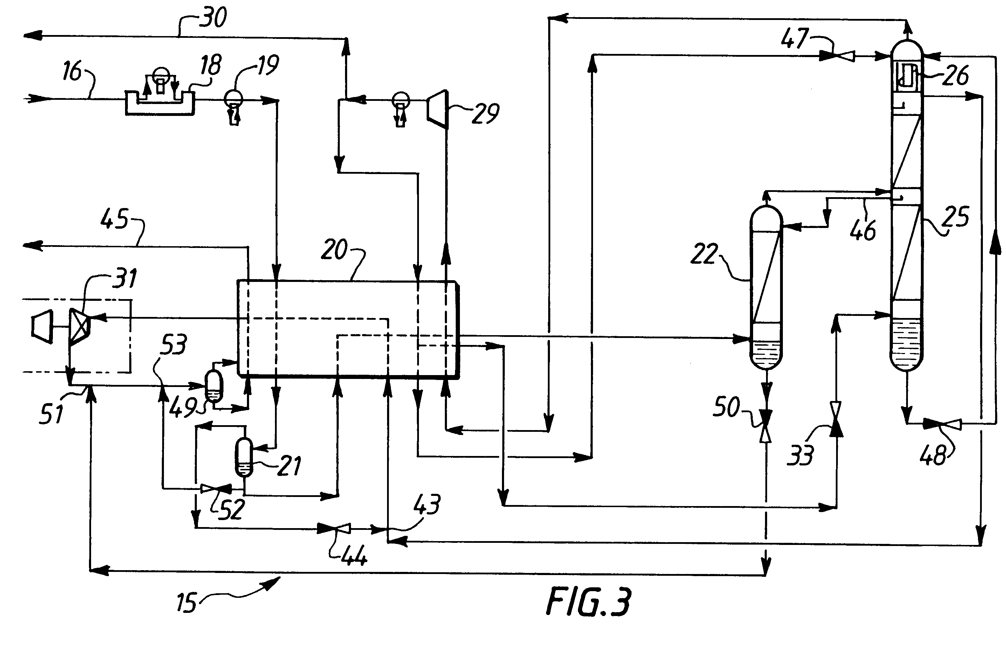

Un exemple de réalisation de l'invention va maintenant être décrit en regard des Figures 3 à 5 des dessins annexés qui sont des schémas représentant respectivement trois modes de réalisation de l'installation de production de CO conforme à l'invention.

Les pressions dont il est question ci-dessous sont des pressions absolues.

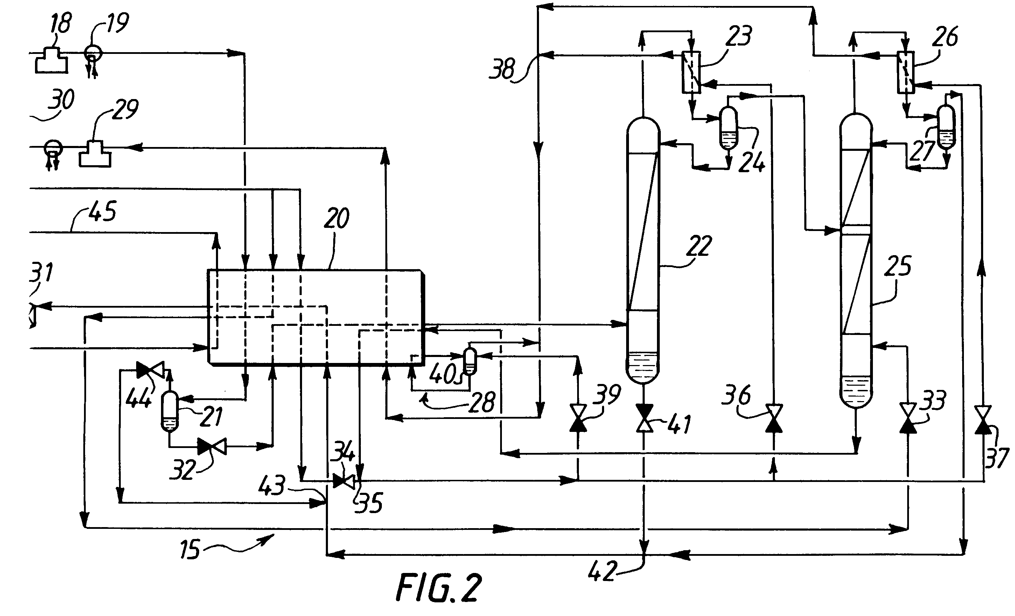

L'installation représentée sur la Figure 2, correspondant au bloc 15 de la Figure 1, est destinée à produire du CO sous pression, à au moins 98 % de pureté, à partir d'un mélange d'alimentation constitué typiquement de CO, CH₄, N₂ et H₂. Ce mélange est prélevé via une conduite 16 (Figures 1 et 2) sur la conduite 17 d'évacuation du gaz résiduaire de l'équipement de la Figure 1.

L'installation 15 comporte essentiellement un compresseur d'alimentation 18 équipé de son réfrigérant à eau ou à air 19, un échangeur de chaleur 20 du type indirect à contre-courant, un pot séparateur 21, une première colonne de distillation 22 équipée d'un condenseur de tête 23 et d'un pot séparateur 24 pour en assurer le reflux, une seconde colonne de distillation 25 équipée d'un condenseur de tête 26 et d'un pot séparateur 27, un thermosiphon 28, un compresseur de cycle 29 équipé de son réfrigérant à eau ou à air, et une turbine de détente 31.

L'installation fonctionne de la façon suivante.

Le mélange d'alimentation est comprimé par le compresseur 18 sous une pression de 10 à 12 bars. Sa condensation partielle à travers l'échangeur 20 à environ - 170 °C permet de séparer dans le pot 21 l'hydrogène sous forme gazeuse. La fraction liquide issue du pot 21 est détendue dans une vanne de détente 32 puis partiellement vaporisée dans l'échangeur de chaleur 20 avant d'alimenter la cuve de la colonne 22 qui fonctionne sous une moyenne pression d'environ 10 bars.

Le méthane liquide est séparé en cuve de la colonne 22 alors que le mélange de tête de cette colonne, contenant l'azote et le monoxyde de carbone, alimente un point intermédiaire de la colonne 25, qui fonctionne également sous la moyenne pression d'environ 10 bars.

Le monoxyde de carbone pur est recueilli en cuve de la colonne 25, tandis que l'azote est soutiré en tête de cette colonne.

Les besoins en froid sont assurés en partie par un cycle CO ouvert, décrit ci-dessous.

Le compresseur de cycle 29 assure la compression du CO de cycle à une haute pression d'environ 11 bars.

Une partie de ce CO haute pression est partiellement refroidie dans l'échangeur 20, détendue dans une vanne de détente 33 à la moyenne pression, et directement injectée en cuve de la colonne 25 pour assurer le rebouillage de la deuxième distillation.

Une autre partie du CO haute pression issue du compresseur 29 est refroidie et liquéfiée du bout chaud au bout froid de l'échangeur 20 puis détendue à la moyenne pression dans une vanne de détente 34. Le CO de cuve de la colonne 25, sous-refroidi dans l'échangeur 20, est mélangé en 35 à ce CO liquide moyenne pression.

Une partie de ce fluide est détendue dans des vannes de détente 36 et 37 à une basse pression d'environ 4,5 bars et alimente les condenseurs de tête 23 et 26.

Le CO gazeux basse pression sortant des condenseurs 23 et 26 est, après réunion en 38, réchauffé à travers l'échangeur 20 avant d'être recomprimé à environ 11 bars par le compresseur 29.

Le CO pur de production est prélevé sur le fluide haute pression du cycle au refoulement du compresseur 29, via une conduite de production 30.

Pour produire du froid au bout froid de l'échangeur 20, le thermosiphon 28 fonctionne avec du CO liquide basse pression. Pour cela, du CO liquide est prélevé à la moyenne pression en aval du point 35 puis détendu dans une vanne de détente 39 avant d'alimenter le pot séparateur 40 du thermosiphon 28. La vaporisation de la fraction liquide recueillie dans ce dernier fournit du froid au bout froid de l'échangeur 20, et le CO gazeux résultant de cette vaporisation retourne dans le pot 40. La phase gazeuse séparée en 40 est mélangée au CO gazeux basse pression provenant des condenseurs 23 et 26.

Du froid est produit par ailleurs par la vaporisation du CH₄ liquide et par la turbine 31. Plus précisément, le méthane liquide de cuve de la colonne 22 est légèrement détendu dans une vanne de détente 41 avant d'être ajouté en 42 à l'azote gazeux de tête de la colonne 25, puis ce mélange est ajouté en 43 à l'hydrogène gazeux ayant subi une détente dans une vanne de détente 44 en sortie du pot 21.

Le méthane liquide est vaporisé dans ce mélange à travers la partie froide de l'échangeur 20, et le gaz résultant est détendu dans la turbine 31 puis réchauffé du bout froid au bout chaud de l'échangeur 20 avant d'être rejeté sous basse pression au réseau de gaz combustible via une conduite 45.

L'installation représentée sur la Figure 3 est une variante de l'installation représentée sur la Figure 2 dont elle diffère par les points suivants.

Dans l'appareil de distillation, la colonne 22 n'est plus équipée de condenseur de tête ni de pot séparateur. Son reflux est assuré par soutirage de mélange azote/ monoxyde de carbone liquide en un emplacement intermédiaire de la colonne 25 via une conduite 46. Le gaz de tête de la colonne 22 exempt de méthane est injecté en ce même emplacement intermédiaire de la colonne 25.

Les colonnes 22 et 25 fonctionnent sous environ 10 bars.

Le refroidissement du condenseur de tête 26 de la colonne 25 est assuré d'une part par du CO haute pression liquéfié à travers l'échangeur 20 et détendu directement à la basse pression dans une vanne de détente 47, et d'autre part par du CO liquide moyenne pression recueilli en cuve de la colonne 25 et détendu à la basse pression dans une vanne de détente 48.

Le thermosiphon 28 de l'installation de la Figure 2 est remplacé par un pot séparateur 49 au bout froid de l'échangeur 20.

La production de froid au bout froid de l'échangeur 20 se fait dans cette forme de réalisation de l'invention par vaporisation d'un liquide contenant les constituants du gaz résiduaire séparés du CO dans les opérations de purification, comme décrit ci-dessous.

Comme à la Figure 2, l'hydrogène séparé dans le pot 21 est détendu dans une vanne de détente 44 et ajouté en 43 à l'azote de tête de la colonne 25, ce mélange gazeux étant ensuite partiellement réchauffé dans l'échangeur 20 et détendu dans la turbine 31.

Le méthane liquide de cuve de la colonne 22 est maintenant détendu à la basse pression dans une vanne de détente 50 et ajouté au gaz d'échappement de la turbine 31 en un emplacement 51.

Une partie du liquide séparé dans le pot 21 est détendue dans une vanne de détente 52 et ajoutée au mélange précédent en un emplacement 53, et l'ensemble alimente le pot séparateur 49. Le liquide issu de ce dernier est vaporisé au bout froid de l'échangeur 20 et réchauffé dans celui-ci avec le gaz issu du pot 49, pour contribuer à la production de froid. Le mélange gazeux final est rejeté au réseau de gaz combustible sous la basse pression via la conduite 45, comme à la Figure 2.

Cette variante présente certains avantages par rapport à l'installation représentée sur la Figure 2 : le remplacement du thermosiphon 28 par un simple pot 49 et la suppression du condenseur de tête 23 et du pot séparateur 24 diminuent le coût de l'installation; d'autre part, la consommation en énergie est abaissée.

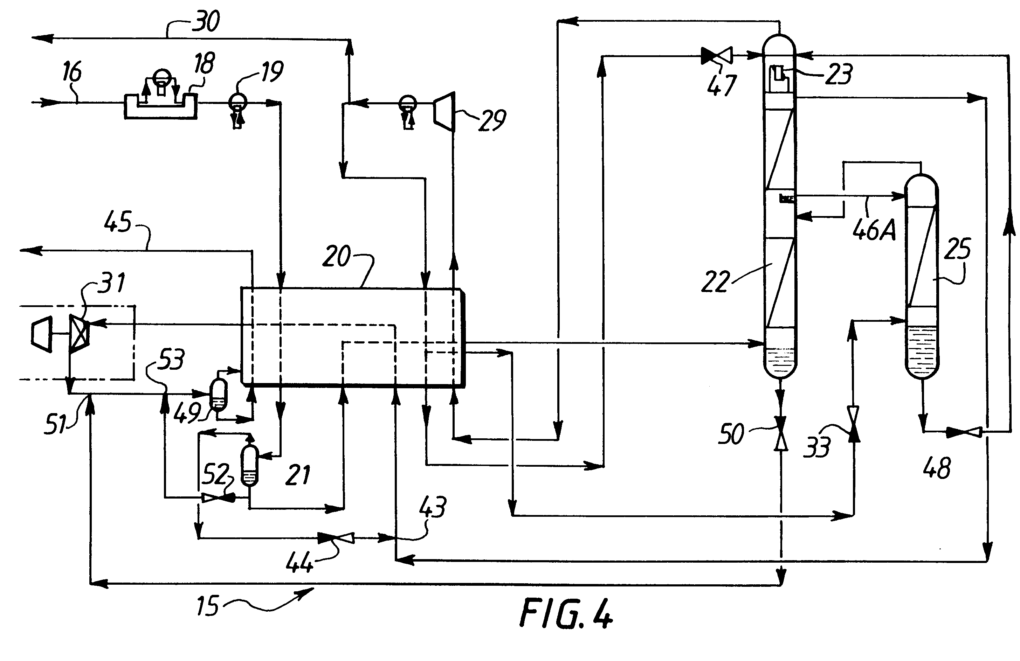

L'installation représentée par la Figure 4 est une variante de l'installation de la Figure 2 dont elle diffère par les points suivants.

Dans l'appareil de distillation, la colonne 25 n'est plus équipée de condenseur de tête ni de pot séparateur. Le reflux est assuré par soutirage d'un mélange exempt de méthane en un emplacement intermédiaire de la colonne 22 via une conduite 46 A. Le gaz de tête de la colonne 25 est injecté en ce même emplacement intermédiaire de la colonne 22.

La colonne 22 fonctionne sous environ 10 bars.

Le refroidissement du condenseur de tête 23 de la colonne 22 est assuré, d'une part par du CO haute pression liquéfié à travers l'échangeur 20 et détendu directement à la basse pression dans une vanne de détente 47 et d'autre part par du CO liquide moyenne pression recueilli en cuve de la colonne 25 et détendu à la basse pression dans la vanne de détente 48.

Dans chacun des modes de réalisation des Figures 2, 3 et 4 en variante, le refoulement du compresseur de cycle 29 peut être à la moyenne pression des colonnes 22 et 25. Dans ce cas, les vannes de détente 33 et 34 (Figure 2) ou 33 (Figure 3 et 4) sont supprimées.

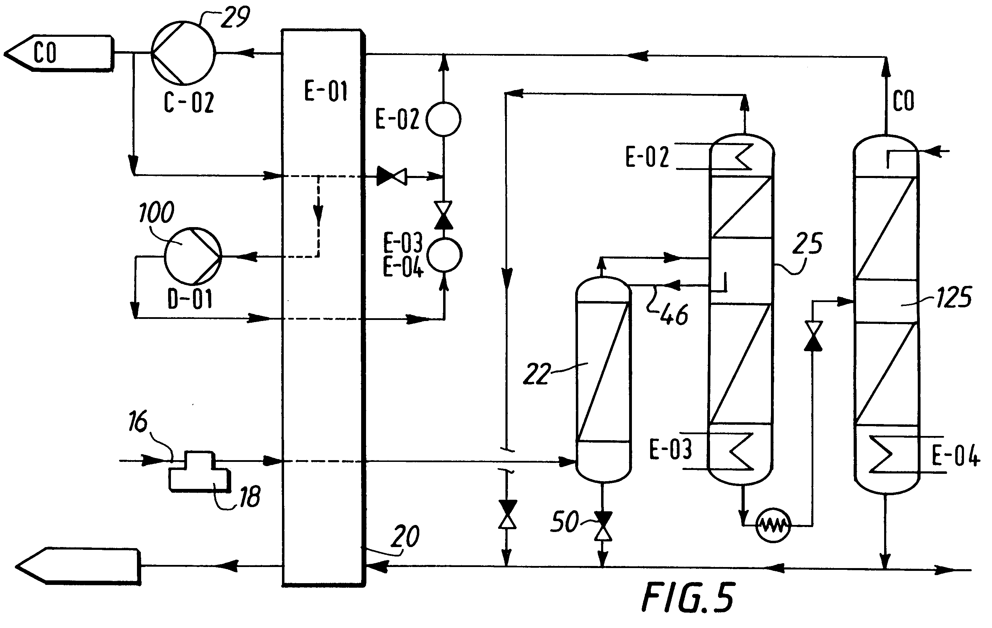

L'installation de la Figure 5 est une variante de la Figure 3, utilisée quand le mélange d'alimentation comprimé dans le compresseur 18 contient de l'argon et ne contient qu'une faible fraction d'hydrogène. Distillé dans la colonne 22, le mélange est séparé, en un liquide de cuve riche en méthane et soutiré pour servir de gaz de "fuel". Le gaz de tête de colonne 22 comprenant essentiellement du monoxyde de carbone, de l'azote et de l'argon est envoyé à un niveau intermédiaire de la colonne 25. Le liquide de cuve de cette colonne comprend l'argon et le monoxyde de carbone; le gaz de tête comportant l'azote et l'hydrogène résiduel est envoyé à la conduite de gaz de fuel. Le liquide de cuve est réchauffé et détendu avant d'être envoyé à un niveau intermédiaire dans une troisième colonne 125 qui produit l'argon pur en cuve et le monoxyde de carbone en tête. Une partie du monoxyde de carbone sert de gaz de cycle frigorifique.

Le cycle frigorifique, qui fonctionne à trois niveaux de pressions, est comprimé à une pression haute dans un compresseur 29 refroidi dans l'échangeur 20 à contre-courant de fluides issus de la distillation. A une température intermédiaire T, une première fraction de cycle est extraite de l'échangeur 20 et turbinée à une pression moyenne. L'autre fraction (non-turbinée) à pression haute est liquéfiée par la vaporisation du liquide riche en méthane et refroidie jusqu'au bout froid de l'échangeur 20 puis détendue à la pression basse. La première fraction turbinée à température T2 est divisée à nouveau en deux courants : un premier courant principal est liquéfié dans les rebouilleurs EO3, E04 des colonnes 25 et 125 et le deuxième est réintroduit dans l'échangeur 20 pour y être liquéfié et refroidi jusqu'au bout froid de l'échangeur 20. Les deux courants liquéfies sont réunis, détendus à la pression basse par une vanne pour fournir la première fraction liquéfiée.

Les deux fractions liquéfiées sont réunies et envoyées en tête de la colonne 125 et dans le condenseur E02 de colonne 25 pour assurer les reflux de ces deux colonnes. La production de CO soutirée en tête de colonne 125 et la fraction de cycle vaporisé (EO2) sont réchauffées dans l'échangeur 20 jusqu'au bout chaud et reconstituent le cycle frigorifique.

## Revendications

1. Procédé de production de monoxyde de carbone à partir d'un mélange contenant essentiellement du monoxyde de carbone, de l'hydrogène et d'autres constituants dont l'azote et le méthane dans lequel le monoxyde de carbone est séparé desdits autres constituants par distillation sous une moyenne pression, ladite distillation comprenant une première distillation dans une première colonne (22) séparant le méthane en cuve et une seconde distillation dans une deuxième colonne (25) séparant le monoxyde de carbone du mélange provenant de la première distillation, et caractérisé en ce que du liquide est utilisé sous une basse pression pour refroidir la tête d'une seule des deux colonnes (22, 25) de distillation et du liquide est soutiré en un emplacement intermédiaire de ladite colonne (22, 25), dont la tête est refroidie, pour assurer le reflux de l'autre colonne de distillation (22, 25).

2. Procédé suivant la revendication 1, dans lequel le monoxyde de carbone est utilisé comme fluide de cycle d'un cycle frigorifique ouvert contribuant à la production de froid nécessaire aux étapes de séparation.

3. Procédé selon la revendication 1 ou 2 caractérisé en ce que le liquide utilisé pour refroidir la tête d'une seule des deux colonnes provient d'un cycle frigorifique.

4. Procédé suivant l'une quelconque des revendications 1 à 3, caractérisé en ce que du CO de refoulement d'un compresseur de cycle (29) est, éventuellement après détente à la moyenne pression, directement injecté en cuve de la deuxième colonne de distillation (25).

5. Procédé suivant la revendication 2, caractérisé en ce que le fluide basse pression du cycle frigorifique CO ouvert se compose d'un mélange d'une part de CO liquide moyenne pression séparé par distillation et détendu à la basse pression, et d'autre part de CO de refoulement d'un compresseur de cycle (29), liquéfié et détendu à la basse pression.

6. Procédé suivant l'une quelconque des revendications 1 à 5, caractérisé en ce que l'hydrogène et les produits résiduaires de la distillation sont mélangés, réchauffés puis détendus dans une turbine (31) pour contribuer à la production de froid nécessaire aux étapes de séparation.

7. Procédé suivant l'une quelconque des revendications 1 à 5, caractérisé en ce que l'hydrogène et les produits résiduaires gazeux de la distillation sont mélangés, réchauffés puis détendus dans une turbine (31), et les produits résiduaires liquides de la distillation, et éventuellement une partie du condensat de l'étape de condensation partielle, sont mélangés, après détente, au gaz d'échappement de la turbine et le mélange est vaporisé au bout froid d'un échangeur (20) pour contribuer à la production de froid nécessaire aux étapes de séparation.

8. Procédé selon l'une quelconque des revendication 1 à 7, caractérisé en ce qu'il est intégré dans un procédé de synthèse d'ammoniac dans lequel la production du mélange de synthèse (N₂+3H₂) comprend une étape initiale d'oxydation partielle d'hydrocarbures ou de charbon et une étape finale de lavage à l'azote, et en ce que le monoxyde de carbone est récupéré par voie cryogénique dans le gaz résiduaire de l'étape de lavage à l'azote.

9. Procédé selon l'une des revendications 1 à 8 dans lequel le liquide de cuve de la deuxième colonne (25) contenant du monoxyde de carbone et un constituant à volatilité intermédiaire entre celui du monoxyde de carbone et celui du méthane, tel que l'argon, est distillé dans une troisième colonne (125) qui produit en tête une vapeur enrichie en monoxyde du carbone et en cuve en fluide riche en ledit constituant à volatilité intermédiaire.

10. Procédé selon l'une des revendications précédentes, dans lequel les deux colonnes (22, 25) fonctionnent au voisinage de la pression à laquelle le mélange d'alimentation est comprimé.

11. Procédé selon l'une des revendications précédentes dans lequel les deux colonnes fonctionnent sous environ 10 bars.

12. Installation de production de monoxyde de carbone à partir d'un mélange gazeux contenant essentiellement du monoxyde de carbone, de l'hydrogène et d'autres constituants dont l'azote et le méthane comprenant des moyens cryogéniques de séparation des constituants du mélange gazeux, dont un échangeur de chaleur (20), et un appareil de distillation et comprenant une première colonne (22) produisant en cuve une fraction riche en méthane et une deuxième colonne (25) produisant en cuve une fraction riche en monoxyde de carbone caractérisée en ce qu'une conduite d'amenée de liquide (46) relie un emplacement intermédiaire de l'autre des deux colonnes (22) à la tête d'une des deux colonnes (25) et un condenseur de tête d'une seule des colonnes (22, 25) est relié à une conduite de liquide à la basse pression.

13. Installation selon la revendication 12 comportant un cycle frigorifique CO ouvert comprenant un compresseur de cycle (29).

14. Installation suivant l'une des revendications 12 ou 13, caractérisée en ce que le condenseur de tête d'une des deux colonnes de distillation (22, 25) est relié à une conduite de CO liquide du cycle frigorifique via une vanne de détente (48) à la basse pression.

15. Installation suivant l'une quelconque des revendications 12 à 14, caractérisée en ce que les moyens de rebouillage de la deuxième colonne (22) comprennent une conduite reliée au refoulement du compresseur de cycle (29), éventuellement via une vanne de détente.

16. Installation suivant l'une quelconque des revendications 12 à 15, caractérisée en ce qu'elle comprend, pour alimenter la partie basse pression du cycle frigorifique, des moyens de détente à la basse pression reliés d'une part à une conduite de soutirage du CO liquide de l'unité de distillation et d'autre part, en aval de l'échangeur de chaleur (20), au refoulement du compresseur de cycle (29).

17. Installation suivant l'une quelconque des revendications 12 à 16, caractérisée en ce que des conduites de soutirage de la tête du pot séparateur (21) et des produits résiduaires de l'appareil de distillation sont reliées les unes aux autres puis à des passages de réchauffement de l'échangeur de chaleur (20) du bout froid vers le bout chaud, eux-mêmes reliés à l'admission d'une turbine de détente (31).

18. Installation suivant l'une quelconque des revendications 12 à 16, caractérisée en ce que des conduites de soutirage de la tête du pot séparateur (21) et des produits résiduaires gazeux de l'appareil de distillation sont reliées l'une à l'autre puis à des passages de réchauffement de l'échangeur de chaleur (20) eux-mêmes reliés à l'admission d'une turbine de détente (31), et en ce que des conduites de soutirage des produits résiduaires liquides de l'appareil de distillation sont reliées à la conduite d'échappement de la turbine (31), laquelle est reliée au bout froid de l'échangeur de chaleur (20).

19. Installation suivant l'une quelconque des revendications 12 à 18, caractérisée en ce qu'elle est intégrée dans un équipement de synthèse d'ammoniac dans lequel les moyens de production du mélange de synthèse (N₂+3H₂) comprennent une première unité d'oxydation partielle d'hydrocarbures ou de charbon et une dernière unité de lavage à l'azote, et en ce que l'alimentation de l'installation est reliée à l'évacuation du gaz résiduaire de l'unité de lavage à l'azote.

20. Installation suivant l'une des revendications 12 à 19, caractérisée en ce qu'elle comprend une troisième colonne de distillation (125) et des moyens pour envoyer un liquide de cuve de la deuxième colonne (25) à la troisième colonne (125).

## Claims

1. Process for producing carbon monoxide from a mixture containing essentially carbon monoxide, hydrogen and other constituents, among which are nitrogen and methane, wherein carbon monoxide is separated from the said other constituents by distillation at a medium pressure, the said distillation comprising a first distillation in a first column (22) separating methane at the bottom and a second distillation in a second column (25) separating carbon monoxide from the mixture coming from the first distillation, and characterized in that liquid is used at a low pressure to cool the top of only one of the two distillation columns (22, 25) and liquid is withdrawn at an intermediate position from the said column (22, 25) the top of which is cooled, so as to ensure the reflux of the other distillation column (22, 25).

2. Process according to claim 1, wherein carbon monoxide is used as the cycle fluid of an open refrigerating cycle contributing to the production of cooling necessary for the separation stages.

3. Process according to claim 1 or 2 characterized in that the liquid used for cooling the top of only one of the two columns comes from a refrigerating cycle.

4. Process according to any one of claims 1 to 3, characterized in that CO delivered by a cycle compressor (29) is, possibly after expansion to the medium pressure, directly injected into the bottom of the second distillation column (25).

5. Process according to claim 2, characterized in that the low pressure fluid of the open CO refrigerating cycle consists of a mixture on the one hand of medium pressure liquid CO separated by distillation and expanded to the low pressure, and on the other hand CO delivered by a cycle compressor (29), liquefied and expanded to the low pressure.

6. Process according to any one of claims 1 to 5, characterized in that hydrogen and the residual products of the distillation are mixed, heated and then expanded in a turbine (31) to contribute to the production of cooling necessary for the separation stages.

7. Process according to any one of claims 1 to 5, characterized in that hydrogen and the residual gaseous products of the distillation are mixed, heated and then expanded in a turbine (31), and the residual liquid products of the distillation, and possibly a part of the condensate from the partial condensation stage are mixed, after expansion, with the exhaust gas from the turbine and the mixture is vaporized at the cold end of an exchanger (20) to contribute to the production of cooling necessary for the separation stages.

8. Process according to any one of claims 1 to 7, characterized in that it is incorporated in a process for the synthesis of ammonia in which the production of the synthesis mixture (N₂ + 3H₂) includes an initial partial oxidation stage of hydrocarbons or carbon and a final nitrogen washing stage, and in that the carbon monoxide is recovered by a cryogenic method from the residual gas of the nitrogen washing stage.

9. Process according to one of claims 1 to 8, wherein liquid from the bottom of the second column (25) containing carbon monoxide and a constituent with a volatility intermediate between that of carbon monoxide and that of methane, such as argon, is distilled in a third column (125) which produces at the top a vapour enriched in carbon monoxide and at the bottom a fluid rich in the said constituent with an intermediate volatility.

10. Process according to one of the preceding claims, wherein the two columns (22,25) operate close to the pressure at which the feed mixture is compressed.

11. Process according to one of the preceding claims wherein the two columns operate at approximately 10 bar.

12. Installation for producing carbon monoxide from a gaseous mixture containing essentially carbon monoxide, hydrogen and other constituents, among which are nitrogen and methane, comprising cryogenic means for separating the constituents of the gaseous mixture, including a heat exchanger (20) and a distillation apparatus and comprising a first column (22) producing at the bottom a fraction rich in methane and a second column (25) producing at the bottom a fraction rich in carbon monoxide, characterized in that a liquid supply pipe (46) connects an intermediate point of the other of the two columns (22) to the top of one of the two columns (25) and a top condenser of only one of the columns (22,25) is connected to a liquid pipe at the low pressure.

13. Installation according to claim 12, including an open CO refrigerating cycle including a cycle compressor (29).

14. Installation according to one of claims 12 or 13, characterized in that the top condenser of one of the two distillation columns (22,25) is connected to a liquid CO pipe of the cooling cycle via a valve (48) expanding it to the low pressure.

15. Installation according to any one of claims 12 to 14, characterized in that the reboiling means of the second column (22) includes a pipe connected to the supply from the cycle compressor (29), possibly via an expansion valve.

16. Installation according to any one of claims 12 to 15, characterized in that it includes, in order to feed the low pressure part of the cooling cycle, means for expansion to the low pressure connected on the one hand to a pipe for withdrawing liquid CO from the distillation unit and on the other hand, upstream from the heat exchanger (20), to the delivery from the cycle compressor (29).

17. Installation according to any one of claims 12 to 16, characterized in that the draw-off pipes at the head of the separator pot (21) and the pipes taking the residual products from the distillation apparatus are connected to each other and then to the heating passages of the heat exchanger (20) from the cold end towards the warm end, themselves connected to the inlet of an expansion turbine (31).

18. Installation according to any one of claims 12 to 16, characterized in that the draw-off pipes at the head of the separator pot (21) and the pipes taking the gaseous residual products from the distillation apparatus are connected to each other and then to the heating passages of the heat exchanger (20) themselves connected to the inlet of an expansion turbine (31), and in that the pipes for drawing off the liquid residual products from the distillation apparatus are connected to the exhaust pipe of the turbine (31), which is itself connected to the cold end of the heat exchanger (20).

19. Installation according to any one of claims 12 to 18, characterized in that it is incorporated into equipment for synthesizing ammonia wherein the means for producing the synthesis mixture (N₂+3H₂) includes a first partial oxidation unit for hydrocarbons or carbon and a second nitrogen washing unit, and in that the supply for the installation is connected to the outlet for the residual gas from the nitrogen washing unit.

20. Installation according to one of claims 12 to 19, characterized in that it includes a third distillation column (125) and means for conveying a liquid from the bottom of the second column (25) to the third column (125).

## Patentansprüche

1. Verfahren zur Herstellung von Kohlenmonoxid aus einem Gemisch, das im wesentlichen Kohlenmonoxid, Wasserstoff und weitere Bestandteile, darunter Stickstoff und Methan, enthält, bei welchem Verfahren Kohlenmonoxid von den anderen Bestandteilen mittels Destillation unter einem mittleren Druck getrennt wird, wobei die Destillation eine erste Destillation in einer ersten Säule (22), bei der im Sumpf Methan abgeschieden wird, und eine zweite Destillation in einer zweiten Säule (25) umfaßt, bei der Kohlenmonoxid von dem aus der ersten Destillation stammenden Gemisch getrennt wird, **dadurch gekennzeichnet**, daß Flüssigkeit unter einem niedrigen Druck zur Kühlung des Kopfes einer der zwei Destillationssäulen (22, 25) verwendet wird, und Flüssigkeit an einer mittleren Stelle der Säule (22, 25), deren Kopf gekühlt wird, entnommen wird, um den Rückfluß der anderen Destillationssäule (22, 25) sicherzustellen.

2. Verfahren nach Anspruch 1, bei dem Kohlenmonoxid als Kreisfluid eines offenen Kühlkreises verwendet wird, das einen Beitrag zu der für die Trennschritte erforderlichen Kälte liefert.

3. Verfahren nach Anspruch 1 oder 2, dadurch gekennzeichnet, daß die Flüssigkeit, die zur Kühlung des Kopfes einer der zwei Säulen verwendet wird, aus einem Kühlkreis stammt.

4. Verfahren nach einem der Ansprüche 1 bis 3, dadurch gekennzeichnet, daß ein Teil des von einem Kreisverdichter (29) verdichteten CO direkt in den Sumpf der zweiten Destillationssäule (25), ggfs. nach Entspannung auf den mittleren Druck, eingeleitet wird.

5. Verfahren nach Anspruch 2, dadurch gekennzeichnet, daß das unter niedrigem Druck stehende Fluid des offenen CO-Kühlkreises aus einem Gemisch einerseits aus unter mittlerem Druck stehendem, flüssigem CO, das mittels Destillation abgeschieden und auf den niedrigen Druck entspannt wird, und andererseits aus vom Kreisverdichter (29) verdichtetem CO, das verflüssigt und auf den niedrigen Druck entspannt wird, besteht.

6. Verfahren nach einem der Ansprüche 1 bis 5, dadurch gekennzeichnet, daß Wasserstoff und die verbleibenden Destillationprodukte vermischt, erwärmt und dann in einer Turbine (31) entspannt werden, um einen Beitrag zu der für die Trennschritte erforderlichen Kälte zu liefern.

7. Verfahren nach einem der Ansprüche 1 bis 5, dadurch gekennzeichnet, daß Wasserstoff und die verbleibenden gasförmigen Destillationprodukte vermischt, erwärmt und dann in einer Turbine (31) entspannt werden und die verbleibenden flüssigen Destillationsprodukte und ggfs. ein Teil des Kondensats der teilweisen Kondensation nach Entspannung mit dem von der Turbine abgegebenen Gas vermischt werden und das Gemisch am kalten Ende eines Austauschers (20) verdampft wird, um einen Beitrag zu der für die Trennschritte erforderlichen Kälte zu liefern.

8. Verfahren nach einem der Ansprüche 1 bis 7, dadurch gekennzeichnet, daß es in ein Ammoniaksyntheseverfahren integriert ist, bei dem die Produktion des Synthesegemisches (N₂ + 3H₂) zu Beginn eine teilweise Oxidation von Kohlenwasserstoffen oder Kohlenstoff und abschließend einen Spülschritt mit Stickstoff umfaßt, und daß Kohlenmonoxid auf kryogenem Wege aus dem Restgas des Spülschritts mit Stickstoff zurückgewonnen wird.

9. Verfahren nach einem der Ansprüche 1 bis 8, bei welchem die Sumpfflüssigkeit der zweiten Säule (25), die Kohlenmonoxid und einen Bestandteil mit einer zwischen der von Kohlenmonoxid und der von Methan liegenden Flüchtigkeit, wie Argon, enthält, in einer dritten Säule (125) destilliert wird, die im Kopf mit Kohlenmonoxid angereicherten Dampf und im Sumpf ein Fluid erzeugt, das mit den Bestandteilen mit der dazwischenliegenden Flüchtigkeit angereichert ist.

10. Verfahren nach einem der vorstehenden Ansprüche, bei welchem die zwei Säulen (22,25) nahe an dem Druck arbeiten, bei dem das Einsatzgemisch verdichtet wird.

11. Verfahren nach einem der vorstehenden Ansprüche, bei welchem die zwei Säulen bei ungefähr 10 bar arbeiten.

12. Vorrichtung zur Herstellung von Kohlenmonoxid aus einem Gasgemisch, das im wesentlichen Kohlenmonoxid, Wasserstoff und weitere Bestandteile, darunter Stickstoff und Methan, enthält, umfassend kryogene Mittel zum Abscheiden von Bestandteilen des gasförmigen Gemisches, darunter einen Wärmeaustauscher (20) und eine Destillationsvorrichtung, und umfassend eine erste Säule (22), die im Sumpf eine methanreiche Fraktion erzeugt, und eine zweite Säule (25), die im Sumpf eine kohlenmonoxidreiche Fraktion erzeugt, dadurch gekennzeichnet, daß eine Flüssigkeitszufuhrleitung (46) eine mittlere Stelle einer der Säulen (22) mit dem Kopf der anderen Säule (25) verbindet und ein Kopfkondensator einer der Säulen (22, 25) mit einer Leitung für unter dem niedrigen Druck stehende Flüssigkeit verbunden ist.

13. Vorrichtung nach Anspruch 12, umfassend einen offenen CO-Kühlkreis mit einem Kreisverdichter (29).

14. Vorrichtung nach Anspruch 12 oder 13, dadurch gekennzeichnet, daß der Kopfkondensator einer der zwei Destillationssäulen (22, 25) mit einer Kühlkreisleitung für flüssiges CO über ein Ventil (48) zum Entspannen auf den niedrigen Druck verbunden ist.

15. Vorrichtung nach einem der Ansprüche 12 bis 14, dadurch gekennzeichnet, daß die Aufkochmittel der zweiten Säule (22) eine Leitung umfassen, die mit der Druckseite des Kreisverdichters (29), ggfs. über ein Druckminderventil, verbunden sind.

16. Vorrichtung nach einem der Ansprüche 12 bis 15, dadurch gekennzeichnet, daß sie zur Versorgung des unter dem niedrigen Druck stehenden Bereichs des Kühlkreises Mittel zum Entspannen auf den niedrigen Druck umfaßt, die einerseits mit einer Entnahmeleitung für flüssiges CO der Destillationseinheit und andererseits stromab des Wärmeaustauschers (20) mit der Druckseite des Kreisverdichters (29) verbunden sind.

17. Vorrichtung nach einem der Ansprüche 12 bis 16, dadurch gekennzeichnet, daß Entnahmeleitungen am Kopf des Trenntiegels (21) und für restliche Produkte der Destillationsvorrichtung miteinander und dann mit den vom kalten Ende zum warmen Ende führenden Anwärmkanälen des Wärmeaustauschers (20) verbunden sind, die selbst mit dem Einlaß einer Entspannungsturbine (31) verbunden sind.

18. Vorrichtung nach einem der Ansprüche 12 bis 16, dadurch gekennzeichnet, daß Entnahmeleitungen am Kopf des Trenntiegels (21) und für restliche gasförmige Produkte der Destillationsvorrichtung miteinander und dann mit Anwärmkanälen des Wärmeaustauschers (20) verbunden sind, die selbst mit dem Einlaß einer Entspannungsturbine (31) verbunden sind, und daß die Entnahmeleitungen für die verbleibenden flüssigen Produkte der Destillationsvorrichtung mit der Außlaßleitung der Turbine (31) verbunden sind, die mit dem kalten Ende des Wärmeaustauschers (20) verbunden ist.

19. Vorrichtung nach einem der Ansprüche 12 bis 18, dadurch gekennzeichnet, daß sie in eine Ammoniaksynthesevorrichtung integriert ist, bei der die Produktionsmittel für das Synthesegemisch (N₂ + 3H₂) eine erste Einheit zur teilweisen Oxidation von Kohlenwasserstoffen oder Kohlenstoff und eine zweite Einheit zum Spülen mit Stickstoff umfassen, und daß die Speisestelle der Vorrichtung mit der Entnahmestelle für die Restgase der Einheit zum Stickstoffspülen verbunden ist.

20. Vorrichtung nach einem der Ansprüche 12 bis 19, dadurch gekennzeichnet, daß sie eine dritte Destillationssäule (125) und Mittel zum Einleiten einer Sumpfflüssigkeit der zweiten Säule (25) in die dritte Säule (125) umfaßt.
